# EUROPEAN PATENT SPECIFICATION

(11) **EP 3 840 293 B1**
(45) Date of publication and mention of the grant of the patent: **16.04.2025**
(21) Application number: 19843912.7
(22) Date of filing: 27.06.2019
(51) Int. Cl.: H04J 3/16

(54) **SERVICE INFORMATION CONFIGURATION METHOD, DEVICE, AND SYSTEM**
VERFAHREN, VORRICHTUNG UND SYSTEM ZUR KONFIGURATION VON DIENSTINFORMATIONEN
PROCÉDÉ, DISPOSITIF ET SYSTÈME DE CONFIGURATION D'INFORMATIONS DE SERVICE

(30) Priority: 03.08.2018 CN 201810879935
(43) Date of publication of application: 23.06.2021
(73) Proprietor: ZTE Corporation, Shenzhen, Guangdong 518057 (CN)
(72) Inventor: ZHOU, Zhibin, Shenzhen, Guangdong 518057 (CN)
(74) Representative: Betten & Resch
(86) International application number: PCT/CN2019/093214
(87) International publication number: WO 2020/024736

(56) References cited:
- EP-A1- 3 462 647
- WO-A1-2016/202296
- WO-A1-2017/173661
- WO-A1-2018/001280
- CN-A- 101 902 667
- CN-A- 105 099 595
- CN-A- 106 992 838
- CN-A- 107 547 223
- CN-A- 107 547 223
- CN-A- 108 076 394
- US-A1- 2012 148 236
- US-A1- 2015 365 193

## Description

### TECHNICAL FIELD

Embodiments of the present invention relate to the technical field of communication, in particular to a method for configuring service, apparatus and system.

### BACKGROUND

With the development of China Mobile's full-service operations, the services accessed by the Metropolitan Area Network (MAN) have also undergone tremendous changes. The traditional MAN access layer is mainly based on base station access, but also undertakes the service access of group users and home cells and various private line tasks under the background of full-service access. Access services are diverse, and bandwidth is increasing, such as the high bandwidth of Long Term Evolution (LTE) base station, Gigabit Ethernet (GE) with 1000 M transmission rate of Optical Line Terminal (OLT), and even uplink bandwidth of 10 G, and the access bandwidth of a large number of private line services for VIP customers is required to reach GE or even higher. A Package Transport Network (PTN) can set up a boutique plane to realize the backhaul of wireless services in 3G and LTE phases, and access private line services for boutique VIP customers. However, a large number of OLT uplink services and private line services for ordinary VIP customers can be accessed with high bandwidth through an Optical Transport Network (OTN).

In the development of LTE/LTE-A (LTE-Advanced, subsequent evolution), operators gradually adopt Building Base band Units (BBU) as the main networking method in order to reduce site rental fees and centrally control base station resources. The BBUs are centrally placed in an integrated computer room, and Radio Remote Units (RRU) are all arranged outdoors at each coverage point. BBU and RRU carry out service extension through the Common Public Radio Interfaces (CPRI). An outdoor OTN device (RRU side) and integrated computer room OTN device (BBU side) carry out butting transmission. When a service is opened at initiation, the outdoor OTN device is connected through a network cable first, so that the device and the network manager are in the same network segment, and then the network management server is used to establish network elements to manage the OTN device. After the network manager is capable of monitoring the device, service configuration is performed through a network management interface, and corresponding cross configuration is set to open the service. It can be seen from this process that in this method, due to the flexible placement of the OTN device at the RRU side (even placed at a remote location), in many cases, it is difficult to manage the RRU side by the network manager (the network cable and network management server are fixed, so a portable server must be carried to follow the device to open a service first, and then connected in series with a main network element after the service is opened), increasing the difficulty of initiation and operation costs due to the fact that a service must be opened on site by a professional.

The document WO2018/001280A1 discloses a method for transporting a client signal in an optical transport network, and an optical transport network device. The method comprises: dividing payloads of an optical payload unit signal into m time slots with a first granularity; dividing a time slot with the first granularity among the m time slots with the first granularity into n time slots with a second granularity, wherein the rate of the time slots with the first granularity is n times the rate of the time slots with the second granularity, m is a positive integer, and n is a positive integer greater than 1; mapping a first client signal into the payload where one or more time slots with the second granularity among the n time slots with the second granularity are located; adding an overhead of a time slot with the first granularity and an overhead of a time slot with the second granularity to the optical payload unit signal to generate an optical data unit signal; and sending the optical data unit signal.

The document CN107547223A provides a method and device for processing a packet optical transmission network (POTN) service. The method comprises the following steps: adding a flag bit for identifying the type ofa POTN service in the POTN service; and determining the type of the POTN service according to the flag bit, and selecting a corresponding physical channel number according to the type of the POTN service that is determined.

### SUMMARY

In view of this, embodiments of the present invention provide a method for configuring service, apparatus and system, to deal with the problems in the existing technology of the difficulty in initiating management of the OTN device at the RRU side and high operation costs due to the fact that a service must be opened on site by a professional.

The technical schemes for dealing with the above technical problem in the embodiments of the present invention are as follows.

According to a first aspect of the embodiments of the present invention, there is provided a method for configuring service, applied to an optical transport network device, called an OTN device. The method includes: receiving, by an OTN device at a radio remote unit side, called a RRU side, a multiframe structure indicator high-order overhead byte, called a MSI high-order overhead byte, sent by an OTN device at a building base band unit side, called a BBU side; extracting information from the MSI high-order overhead byte and configuring line-side service data according to the information extracted from the MSI high-order overhead byte; receiving a MSI low-order overhead byte sent by the OTN device at the BBU side; and extracting information from the MSI low-order overhead byte and configuring client-side service data according to the information extracted from the MSI low-order overhead byte.

According to a second aspect of the embodiments of the present invention, there is provided an optical transport network device, called an OTN device arranged at a radio remote unit side, called a RRU side, including a memory, a processor, and a computer program stored in the memory and executable on the processor. The steps of the method of the first aspect are performed when the computer program is executed by the processor.

According to a third aspect of the embodiments of the present invention, there is provided a system for configuring service, including a network element at a building base band unit side, called a BBU side, an optical transport network device, called an OTN device at the BBU side, and the OTN device at the RRU side of the second aspect.

The network element at the BBU side is configured to set line-side service data and client-side service data. The line-side service data is set in a MSI high-order overhead byte and the client-side service data is set in a MSI low-order overhead byte.

The OTN device at the BBU side is configured to send the MSI high-order overhead byte to the OTN device at the RRU side after the network element at the BBU side sets the line-side service data and client-side service data, and send the MSI low-order overhead byte to the OTN device at the RRU side after a line-side service is established.

The OTN device at the RRU side is configured to configure line-side service data according to the received MSI high-order overhead byte and configure client-side service data according to the received MSI low-order overhead byte.

According to the method for configuring service, apparatus and system in embodiments of the present invention, an OTN device transmits line-side service data using a high-order overhead byte, and transmits client-side service data using a low-order overhead byte, so that an OTN device at an RRU side can automatically follow the service configuration of an OTN device at an upstream BBU side without performing network management and configuration on site, and has the function of automatically opening services. Therefore, embodiments of the present invention deal with the problems in the existing technology of the difficulty in initiating management of the OTN device at the RRU side and high operation costs due to the fact that a service must be opened on site by a professional.

### BRIEF DESCRIPTION OF DRAWINGS

Fig. 1 is a flowchart showing a method for configuring service provided in embodiment one of the present invention;
Fig. 2 is a schematic diagram of OTN devices establishing communication between the BBU side and the RRU side in an embodiment of the present invention;
Fig. 3 is a schematic diagram of the frame structure of OPUk multiplexing overhead;
Fig. 4 is a schematic diagram showing networking of OTN devices in embodiment two of the present invention;
Fig. 5 is a flowchart showing a method for configuring service in embodiment two of the present invention;
Fig. 6 is a meaning table showing G709 OPU2 MSI codes (payload type=21) in embodiment two of the present invention;
Fig. 7 is a schematic structural diagram of a module of an OTN device provided in embodiment three of the present invention; and
Fig. 8 is a schematic structural diagram of a system for configuring service provided in embodiment four of the present invention.

The implementation, functional features and advantages of the embodiments of the present invention will be further explained with reference to the accompanying drawings.

### DETAILED DESCRIPTION

Technical problems to be dealt with, technical schemes and beneficial effects of the present invention may be clearer and understood from a detailed description of embodiments of the present invention in conjunction with the drawings. It should be understood that the specific embodiments described herein are used to explain the present invention, and shall not be construed to limit the present invention.

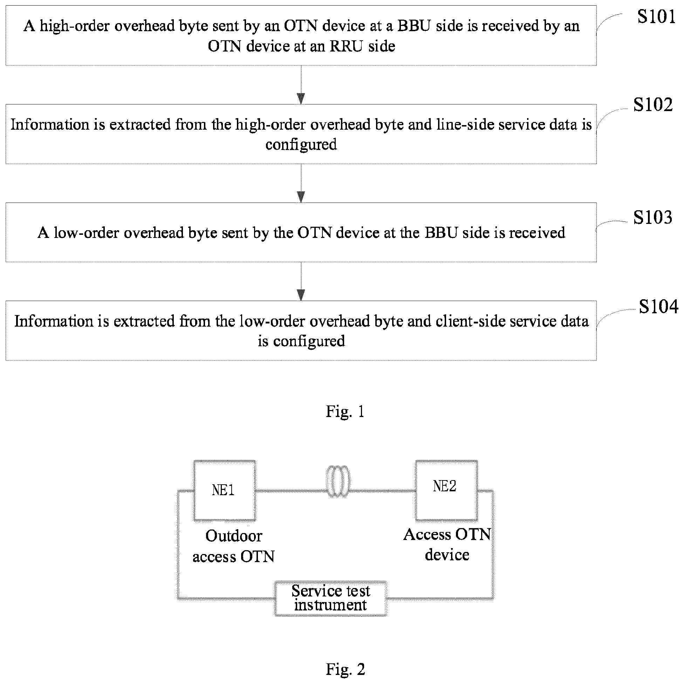

Embodiment one of the present invention provides a method for configuring service, which is applied to an OTN device at the RRU side, referring to Fig. 1, the method includes following steps.

In a step of S 101, a high-order overhead byte sent by an OTN device at a BBU side is received by an OTN device at an RRU side.

In a step of S102, information is extracted from the high-order overhead byte and line-side service data is configured.

In a step of S103, a low-order overhead byte sent by the OTN device at the BBU side is received.

In a step of S104, information is extracted from the low-order overhead byte and client-side service data is configured.

Refer to Fig. 2 which is a schematic diagram of OTN devices establishing communication between the BBU side and the RRU side.

A network element NE2 at the BBU side sets a service and cross, and the service accesses to the NE2 and carries the cross to the line. In a network element NE1 at the RRU side (in practical application, the network element NE2 may be virtual), the service and cross configuration of the NE1 are opened.

In this embodiment, the service and cross of the device at the BBU side may be manually set, and the service and cross of the device at the RRU side may be automatically opened according to the service configuration at the BBU side.

In a feasible scheme, the high-order overhead byte includes a multiframe structure indicator (MSI) high-order overhead byte set in a high-order payload structure identifier (PSI). An optical channel data unit (ODUk) type of a time slot at an optical channel (OCH) side at the BBU side is inserted in the MSI high-order overhead byte.

The low-order overhead byte includes a MSI low-order overhead byte set in a low-order PSI. A service type and a client port number corresponding to a client port at the RRU side are inserted in the MSI low-order overhead byte.

In a feasible scheme, in the step of S 102, extracting information from the high-order overhead byte and configuring line-side service data include: extracting the MSI high-order overhead byte from the high-order PSI; and configuring a time slot of an optical channel data unit (ODU) for the line-side according to information carried by the MSI high-order overhead byte.

In a feasible scheme, in the step of S103, extracting information from the low-order overhead byte and configuring client-side service data include: extracting the MSI low-order overhead byte from the low-order PSI; acquiring client port service configuration information and cross information according to information carried by the MSI low-order overhead byte; and establishing a service of a designated client port according to the client port service configuration information and cross information.

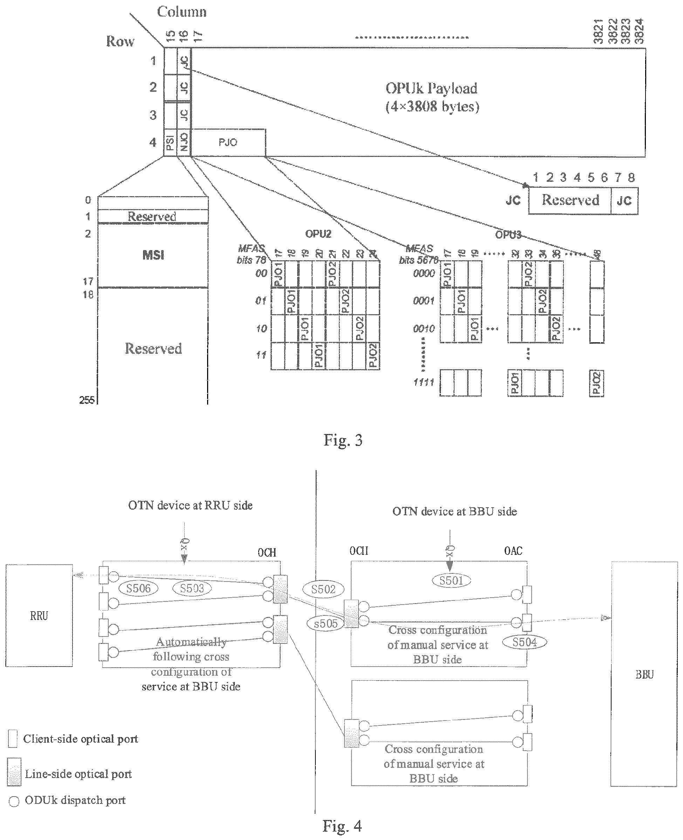

In practical application, a multiplex structure indicator (MSI) overhead byte in the optical channel payload unit (OPUk) multiplexing overhead may be used. Specifically, as shown in Fig. 3, the high-order overhead byte is used to transmit line-side service data, while the low-order overhead byte is used to transmit client-side service data. One of the most obvious advantages of doing so is that the hierarchy is clear and easy to understand.

For the device of the Network element NE2 at the BBU side, because the NE2 is managed by the network manager, the interface supports corresponding service and cross configurations, the device of the network element NE2 sets a MSI high-order overhead byte in the line-side high-order overhead (such as the high-order payload structure identifier (PSI)) according to the standard requirements, inserts optical channel date unit (ODUk) types of various time slots at the local-end optical channel (OCH) side into the MSI high-order overhead byte, sets a MSI low-order overhead byte in the low-order overhead, and inserts service types and client port numbers corresponding to client ports at the RRU side (specifically, which client port to cross is specified in the network manager at the BBU side) into the MSI low-order overhead byte. When the configuration at the BBU side is completed, the OTN device at the BBU side may establish a line-side service with the OTN device at the RRU side.

For the device of the network element NE1 at the RRU side, the line-side configuration at the BBU side is acquired first through the MSI high-order overhead byte. The RRU side configures a line-side service according to information. After the line-side service is configured, the RRU side may acquire the MSI low-order overhead byte (in practical application, after the line-side time slots are all configured accurately, the line-side at the RRU side may acquire corresponding low-order overhead), configure corresponding client port services using the information transmitted from the low-order overhead, cross-configure a first time slot according to the obtained low-order overhead, and cross a client port designated by this time slot. Thus, the service configuration and cross establishment at the line-side and client-side at the RRU side are completed, and the service is opened.

In a feasible scheme, in the step of S104, after information is extracted from the low-order overhead byte and client-side service data is configured, the method further includes: updating a service configuration and cross configuration of the device at the RRU side according to the received service information.

In practical application, updating of the service configuration and cross configuration of the device at the RRU side includes deletion and adding of a service.

When a service of a certain client port is opened, the service port of the OTN device at the RRU side starts to wait for a next piece of information after receiving the information from the BBU side each time. If no information is received after a preset time, it can be considered that the service of the client port has been deleted at the BBU side, then a corresponding service at the RRU side can be deleted.

If a service is added, the service configuration is executed first and then a cross configuration is executed.

According to the method for configuring service in embodiments of the present invention, an OTN device transmits line-side service data using a high-order overhead byte, and transmits client-side service data using a low-order overhead byte, so that an OTN device at an RRU side can automatically follow the service configuration of the OTN device at an upstream BBU side without performing network management and configuration on site, and has the function of automatically opening services. A service can be opened only by connecting optical fibers without going to the site, reducing difficulty of initiation and operation costs.

In order to describe the present invention in more detail, on the basis of the foregoing embodiment, embodiment two which is not part of the present invention provides another method for configuring service. The method is described in conjunction with an optical channel transport unit OTU2 (payload type 21) carrying the common public radio CPRI3 service. Referring to Fig. 4, the service line with double-headed arrow represents one of the services, after networking is completed, the whole flow is initiated by the device at the BBU side, the device at the RRU side follows the configuration of the BBU side, and if the service at the BBU side changes, the device at the RRU side follows the change.

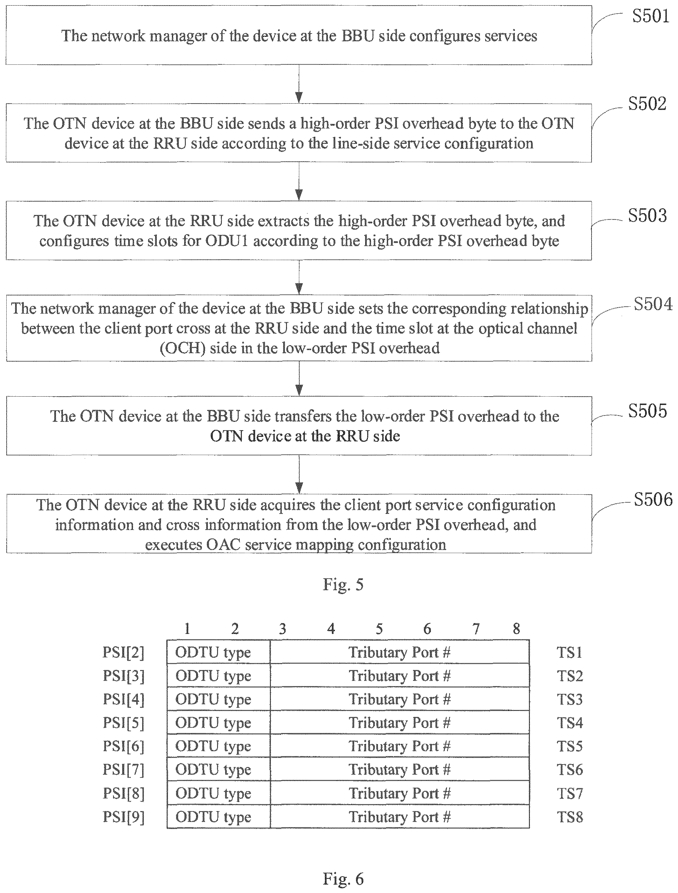

Referring to Fig. 5, this embodiment will be described based on the functional flow of the device at the BBU side and the device at the RRU side.

In a step of S501, the network manager of the device at the BBU side configures services.

In practical application, services configured at the BBU side include a line-side service and a client-side service.

For the line-side services (including two ODU1, which occupy the first and second, third and fourth time slots respectively), in order to ensure that the RRU side acquires correct ODUk types, the payload structure identifiers (PSI) [14-29] are used to describe the ODUk types of eight time slots. In this embodiment, a MSI high-order overhead byte may be set in the high-order PSI overhead, and ODUk types of various time slots at the local-end OCH side may be inserted into the MSI high-order overhead byte.

The client-side service (CPRI3) is mapped to the ODU1 using a standard mapping mode. In this embodiment, a MSI low-order overhead byte may be set in low-order PSI overhead, and service types and client port numbers corresponding to client ports at the RRU side may be inserted into the MSI low-order overhead byte.

After the line-side service is successfully configured at the BBU side, the line-side service is opened (in this embodiment, the line-side service at the RRU side is an OTU2 service by default).

In a step of S502, the OTN device at the BBU side sends a high-order PSI overhead byte to the OTN device at the RRU side according to the line-side service configuration.

In a step of S503, the OTN device at the RRU side extracts the high-order PSI overhead byte, and configures time slots for ODU1 according to the high-order PSI overhead byte.

According to the information carried by the MSI overhead byte, as shown in Fig. 6, the tributary ports of the time slots 1 and 2 are consistent. According to PSI [14-15] and PSI [16-17], it is indicated that the two time slots are ODU1 time slots, so that at the line-side, one ODU1 (occupying time slots 1 and 2) may be configured, and the configuration of another ODU1 (occupying time slots 3 and 4) may be implemented by means of the same method.

In practical application, the information required for side line service configuration at the RRU side is shown in Table 1.

**Table 1 Information about low-order ODUk at line-side**

| Service configuration information | Source | Remarks |
|---|---|---|
| Mapping mode | PT | G.709 15.9.2.1.1 |
| Port number | MSI | G.709 19.4.1, based on occupied position of MSI first time slot |
| Occupied time slot | MSI | G.709 19.4.1, based on list of time slots of same number |
| ODUk type | PSI[14-29] | Private definition |

In a step of S504, the network manager of the device at the BBU side sets the corresponding relationship between the client port cross at the RRU side and the time slot at the optical channel (OCH) side in the low-order PSI overhead.

There is a need in the BBU network manager to specify which time slot at the OCH side the client port at the RRU side crosses to. In this embodiment, time slots 1 and 2 are specified for client port 1, and time slots 3 and 4 are specified for client port 5. In this step, the corresponding relationship between the port number of the client-side (OAC) on the RRU side and the time slot is completed, and preparation is made for establishment of the cross at the RRU side.

In a step of S505, the OTN device at the BBU side transfers the low-order PSI overhead to the OTN device at the RRU side.

In a step of S506, the OTN device at the RRU side acquires the client port service configuration information and cross information from the low-order PSI overhead, and executes OAC service mapping configuration.

In this step, the information required for client service configuration at the RRU side is shown in Table 2.

**Table 2 Client-side port information**

| Service configuration information | Source | Remarks |
|---|---|---|
| Mapping mode | PSI[10] | Private definition |
| Port number | PSI[11-12] | Private definition (specified in step 3) |
| Occupied time slot | None | Client port occupies the whole time slot |
| ODUk type | PSI[13-14] | Private definition |

A service of a designated client port may be established according to the above four information.

After executing the OAC service mapping configuration at the RRU side, the client port 1 is crossed to the time slots 3 and 4 of a line port, and the client port 5 is crossed to the time slots 1 and 2 of a line port. After such cross configuration is completed, the services of the client-side ports 1 and 5 at the RRU side are be automatically opened.

In practical application, aiming at the PSI overhead based on the high/low order ODUk at line-side in Fig. 3, there is a need to update the service configuration and cross configuration of the device at the RRU side in real time. It is guaranteed that if a service is added, the service configuration is executed first and then a cross configuration is executed; and if a service is deleted, cross deletion is executed before the service is deleted.

According to the method for configuring service in embodiments of the present invention, an OTN device transmits line-side service data using a high-order overhead byte, and transmits client-side service data using a low-order overhead byte, so that an OTN device at an RRU side can automatically follow the service configuration of the OTN device at an upstream BBU side without performing network management and configuration on site, and has the function of automatically opening services. A service can be opened only by connecting optical fibers without going to the site, reducing difficulty of initiation and operation costs.

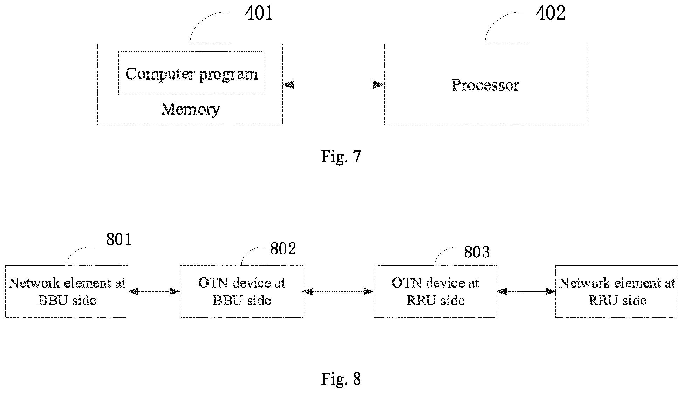

On the basis of the foregoing embodiments, embodiment three of the present invention provides an OTN device, the OTN device being located at an RRU side, referring to Fig. 7. The OTN device includes a memory 401, a processor 402 and a computer program stored in the memory 401 and executable on the processor 402, where when the computer program is executed by the processor 402, the steps of the method of embodiment one or embodiment two are performed, including: a high-order overhead byte sent by an OTN device at a BBU side is received by an OTN device at a radio remote unit (RRU) side; information is extracted from the high-order overhead byte and line-side service data is configured; a low-order overhead byte sent by the OTN device at the BBU side is received; and information is extracted from the low-order overhead byte and client-side service data is configured.

In a feasible scheme, the high-order overhead byte includes a multiframe structure indicator (MSI) high-order overhead byte. An optical channel data unit (ODUk) type of a time slot at an optical channel (OCH) side at the BBU side is inserted in the MSI high-order overhead byte.

In a feasible scheme, in the case the step of extracting information from the high-order overhead byte and configuring line-side service data is executed, when the computer program is executed by the processor 402, following steps are also implemented.

A MSI high-order overhead byte is extracted from the high-order PSI.

A time slot of an optical channel data unit (ODU) is configured for the line-side according to information carried by the MSI high-order overhead byte.

In a feasible scheme, the low-order overhead byte includes a MSI low-order overhead byte. A service type and a client port number corresponding to a client port at the RRU side are inserted in the MSI low-order overhead byte.

In a feasible scheme, in the case the step of extracting information from the low-order overhead byte and configuring client-side service data is executed, when the computer program is executed by the processor 402, the following steps are also implemented.

The MSI low-order overhead byte is extracted from the low-order PSI.

Client port service configuration information and cross information are acquired according to information carried by the MSI low-order overhead byte.

A service of the designated client port is established according to the client port service configuration information and cross information.

In a feasible scheme, after the step of extracting information from the low-order overhead byte and configuring the client-side service data is executed, when the computer program is executed by the processor 402, following step is also implemented.

A service configuration and cross configuration of the device at the RRU side are updated according to the received service information.

In a feasible scheme, when the computer program is executed by the processor 402, the following steps are also implemented.

When adding a service, the service configuration is executed first, and then a cross configuration related to the service configuration is executed.

When deleting a service, the cross configuration related to the service is deleted first, and then the service is deleted.

In practical application, updating of the service configuration and cross configuration of the device at the RRU side includes deletion and adding of a service.

When a service of a certain client port is opened, the service port of the OTN device at the RRU side starts to wait for the next information after receiving the information of the BBU side every time. If no information is received after a preset time, it may be considered that the service of the client port has been deleted at the BBU side, then a corresponding service at the RRU side may be deleted.

If a service configuration is added, the service configuration is executed first and then a cross configuration is executed.

According to the method for configuring service in embodiments of the present invention, an OTN device transmits line-side service data using a high-order overhead byte, and transmits client-side service data using a low-order overhead byte, so that an OTN device at an RRU side can automatically follow the service configuration of the OTN device at an upstream BBU side without performing network management and configuration on site, and has the function of automatically opening services. There is only a need to open a service by connecting optical fibers without going to the site, reducing difficulty of initiation and operation costs.

On the basis of the foregoing embodiments, embodiment four of the present invention provides a system for configuring service, referring to Fig. 8, the system includes: a network element at a BBU side 801, an OTN device at the BBU side 802, and an OTN device at a RRU side 803.

The network element at the BBU side 801 is configured to set line-side service data and client-side service data. The line-side service data is set in a high-order overhead byte and the client-side service data is set in a low-order overhead byte.

The OTN device at the BBU side 802 is configured to send the high-order overhead byte to the OTN device at the RRU side after the network element at the BBU side sets the line-side service data and client-side service data, and send the low-order overhead byte to the OTN device at the RRU side after a line-side service is established.

The OTN device at the RRU side 803 is configured to configure line-side service data according to the received high-order overhead byte and configure client-side service data according to the received low-order overhead byte.

In practical application, for the OTN device at the RRU side 803, the OTN device described in embodiment three may be adopted, which is not described in detail here.

According to the system for configuring service in embodiments of the present invention, an OTN device transmits line-side service data using a high-order overhead byte, and transmits client-side service data using a low-order overhead byte, so that an OTN device at an RRU side can automatically follow the service configuration of the OTN device at an upstream BBU side without performing network management and configuration on site, and has the function of automatically opening services. There is only a need to open a service by connecting optical fibers without going to the site, reducing difficulty of initiation and operation costs.

On the basis of the foregoing embodiments, embodiment 5 of the present invention provides a storage medium, where one or more programs are stored in the storage medium, and the one or more programs may be executed by one or more processors to perform the steps described in embodiment one and embodiment two.

The several embodiments of the present invention are described above with reference to the drawings, and the scope of rights of the embodiments of the present invention is only limited by the appended claims.

## Claims

1. A method for configuring service, applied to an optical transport network device, called an OTN device, the method comprises
receiving, by an OTN device at a radio remote unit side, called a RRU side, a multiframe structure indicator high-order overhead byte, called a MSI high-order overhead byte, sent by an OTN device at a building base band unit side, called a BBU side (S101);
extracting information from the MSI high-order overhead byte and configuring line-side service data according to the information extracted from the MSI high-order overhead byte (S102);
receiving a MSI low-order overhead byte sent by the OTN device at the BBU side (S103); and
extracting information from the MSI low-order overhead byte and configuring client-side service data according to the information extracted from the MSI low-order overhead byte (S104).

2. The method for configuring service of claim 1, wherein an optical channel data unit type, called an ODUk type, of a time slot at an optical channel side, called an OCH side, at the BBU side is inserted in the MSI high-order overhead byte.

3. The method for configuring service of claim 2, wherein the extracting information from the MSI high-order overhead byte and configuring line-side service data according to the information extracted from the MSI high-order overhead byte comprises:
extracting the MSI high-order overhead byte from a high-order payload structure identifier, called a high-order PSI;
acquiring the ODUk type carried by the MSI high-order overhead byte according to information carried by the MSI high-order overhead byte; and
configuring a time slot of an ODU for the line-side according to the ODUk type.

4. The method for configuring service of claim 1, wherein a service type, a client port number and cross information corresponding to a client port at the RRU side are inserted in the MSI low-order overhead byte, wherein the cross information includes a corresponding relationship between the client port at the RRU side and a time slot at an optical channel, called OCH, side.

5. The method for configuring service of claim 4, wherein the extracting information from the MSI low-order overhead byte and configuring client-side service data according to the information extracted from the MSI low-order overhead byte comprises:
extracting the MSI low-order overhead byte from a low-order PSI;
acquiring client port service configuration information and cross information according to information carried by the MSI low-order overhead byte; and
establishing a service of a designated client port according to the client port service configuration information and cross information.

6. The method for configuring service of claim 5, wherein after extracting information from the MSI low-order overhead byte and configuring client-side service data according to the information extracted from the MSI low-order overhead byte, the method further comprises:
updating a service configuration and cross configuration of the device at the RRU side according to the received service configuration information and cross information.

7. The method for configuring service of claim 6, wherein the method further comprises the following steps:
in response to adding the service, executing the service configuration first, and then executing a cross configuration related to the service configuration; and
in response to deleting a service, deleting the cross configuration related to the service first, and then deleting the service.

8. An optical transport network device, called an OTN device, arranged at a radio remote unit side, called a RRU side, comprising a memory (401), a processor (402), and a computer program stored in the memory (401) and executable on the processor (402), wherein the steps of the method of any one of claims 1 to 7 are performed when the computer program is executed by the processor (402).

9. A system for configuring service, comprising a network element at a building base band unit side, called a BBU side (801), an optical transport network device, called an OTN device at the BBU side (802), and the OTN device at the RRU side (803) of claim 8, wherein
the network element at the BBU side (801) is configured to set line-side service data and client-side service data, wherein the line-side service data is set in a MSI high-order overhead byte and the client-side service data is set in a MSI low-order overhead byte;
the OTN device at the BBU side (802) is configured to send the MSI high-order overhead byte to the OTN device at the RRU side (803) after the network element at the BBU side (801) sets the line-side service data and client-side service data, and send the MSI low-order overhead byte to the OTN device at the RRU side (803) after a line-side service is established; and
the OTN device at the RRU side (803) is configured to configure line-side service data according to the received MSI high-order overhead byte and configure client-side service data according to the received MSI low-order overhead byte.

## Patentansprüche

1. Verfahren zum Konfigurieren eines Dienstes, angewandt auf ein optisches Transportnetzwerkgerät, genannt OTN-Gerät, wobei das Verfahren umfasst:
Empfangen, durch ein OTN-Gerät an einer Remote-Radio-Unit-Seite, genannt RRU-Seite, eines Multiframe-Strukturindikator-High-Order-Overhead-Bytes, genannt MSI High-Order-Overhead-Byte, gesendet von einem OTN-Gerät an einer Gebäude-Basisbandeinheits-Seite, genannt eine BBU-Seite (S101);
Extrahieren von Informationen aus dem MSI High-Order-Overhead-Byte und Konfigurieren von leitungsseitigen Dienstdaten gemäß den Informationen, die aus dem MSI High-Order-Overhead-Byte extrahiert sind (S102);
Empfangen eines MSI Low-Order-Overhead-Bytes, gesendet von dem OTN-Gerät auf der BBU-Seite (S103);
Extrahieren von Informationen aus dem MSI Low-Order-Overhead-Byte und Konfigurieren von kundenseitigen Dienstdaten gemäß den Informationen, die aus dem MSI Low-Order-Overhead-Byte extrahiert sind (S104).

2. Verfahren zum Konfigurieren eines Dienstes nach Anspruch 1, wobei ein optischer Kanaldateneinheitentyp, genannt ODUk-Typ, eines Zeitslots auf einer optischen Kanalseite, genannt OCH-Seite, auf der BBU-Seite in das MSI High-Order-Overhead-Byte eingesetzt ist.

3. Verfahren zum Konfigurieren eines Dienstes nach Anspruch 2, wobei das Extrahieren von Informationen aus dem MSI High-Order-Overhead-Byte und das Konfigurieren von leitungsseitigen Dienstdaten gemäß den Informationen, die aus dem MSI High-Order-Overhead-Byte extrahiert sind, umfasst:
Extrahieren des MSI High-Order-Overhead-Bytes aus einem High-Order-Nutzlast-Strukturidentifikator, genannt High-Order-PSI;
Erlangen des ODUk-Typs, der von dem MSI High-Order-Overhead-Byte getragen wird, gemäß Informationen, die von dem MSI High-Order-Overhead-Byte getragen werden; und
Konfigurieren eines Zeitslots eines ODU für die Leitungsseite gemäß dem ODUk-Typ.

4. Verfahren zum Konfigurieren eines Dienstes nach Anspruch 1, wobei ein Diensttyp, eine Kundenportnummer und Cross-Informationen, die einem Kundenport auf der RRU-Seite entsprechen, in das MSI Low-Order-Overhead-Byte eingesetzt sind, wobei die Cross-Informationen eine entsprechende Beziehung umfassen zwischen dem Kundenport auf der RRU-Seite und einem Zeitslot auf einer optischen Kanal-, genannt OCH-, Seite.

5. Verfahren zum Konfigurieren eines Dienstes nach Anspruch 4, wobei das Extrahieren von Informationen aus dem MSI Low-Order-Overhead-Byte und Konfigurieren von kundenseitigen Dienstdaten gemäß den Informationen, die aus dem MSI Low-Order-Overhead-Byte extrahiert sind, umfasst:
Extrahieren des MSI High-Order-Overhead-Bytes aus einem Low-Order-PSI;
Erlangen von Kundenportdienstkonfigurationsinformationen und Cross-Informationen gemäß Informationen, die von dem MSI Low-Order-Overhead-Byte getragen werden; und
Einrichten eines Dienstes eines bestimmten Kundenports gemäß der Kundenportdienstkonfigurationsinformationen und der Cross-Informationen.

6. Verfahren zum Konfigurieren eines Dienstes nach Anspruch 5, wobei nach dem Extrahieren von Informationen aus dem MSI High-Order-Overhead-Byte und dem Konfigurieren von kundenseitigen Dienstdaten gemäß der Informationen, die aus dem MSI High-Order-Overhead-Byte extrahiert sind, das Verfahren ferner umfasst:
Updaten einer Dienstkonfiguration und Cross-Informationen des Geräts auf der RRU-Seite gemäß der empfangenen Dienstkonfigurationsinformationen und Cross-Informationen.

7. Verfahren zum Konfigurieren eines Dienstes nach Anspruch 6, wobei das Verfahren ferner die folgenden Schritte umfasst:
als Antwort auf Hinzufügen des Dienstes, zuerst Ausführen der Dienstkonfiguration, und dann Ausführen einer Cross-Konfiguration, die mit der Dienstkonfiguration in Zusammenhang steht; und
als Antwort auf Löschen eines Dienstes, zuerst Löschen der Cross-Konfiguration, die mit dem Dienst in Zusammenhang steht, und dann Löschen des Dienstes.

8. Optisches Transportnetzwerkgerät, genannt OTN-Gerät, angeordnet an einer Radio-Remote-Unit-Seite, genannt RRU-Seite, umfassend einen Speicher (401), einen Prozessor (402) und ein Computerprogramm, das in dem Speicher (401) gespeichert ist und auf dem Prozessor (402) ausführbar ist, wobei die Schritte des Verfahrens nach einem der Ansprüche 1 bis 7 durchgeführt werden, wenn das Computerprogramm von dem Prozessor (402) ausgeführt wird.

9. System zum Konfigurieren eines Dienstes, umfassend ein Netzwerkelement an einer Gebäude-Basisbandeinheits-Seite, genannt BBU-Seite (801), ein optisches Transportnetzwerkgerät, genannt OTN-Gerät, an der BBU-Seite (802), und das OTN-Gerät an der RRU-Seite (803) nach Anspruch 8, wobei das Netzwerkelement an der BBU-Seite (801) konfiguriert ist zum Setzen leitungsseitiger Dienstdaten und kundenseitiger Dienstdaten, wobei die leitungsseitigen Dienstdaten in einem MSI High-Order-Overhead-Byte gesetzt sind, und die kundenseitigen Dienstdaten in einem MSI Low-Order-Overhead-Byte gesetzt sind;
wobei das OTN-Gerät an der BBU-Seite (802) konfiguriert ist zum Senden des MSI High-Order-Overhead-Byte an das OTN-Gerät an der RRU-Seite (803), nachdem das Netzwerkelement an der BBU-Seite (801) die leitungsseitigen Dienstdaten und kundenseitige Dienstdaten setzt, und zum Senden des MSI Low-Order-Overhead-Byte an das OTN-Gerät an der RRU-Seite (803), nachdem ein leitungsseitiger Dienst eingerichtet ist; und
wobei das OTN-Gerät an der RRU-Seite (803) konfiguriert ist zum Konfigurieren von leitungsseitigen Dienstdaten gemäß dem empfangenen MSI High-Order-Overhead-Byte und zum Konfigurieren von kundenseitigen Dienstdaten gemäß dem empfangenen MSI Low-Order-Overhead-Byte.

## Revendications

1. Un procédé de configuration de service, appliqué à un dispositif de réseau de transport optique, appelé dispositif OTN, le procédé comprenant :
le fait, par un dispositif OTN côté unité radio distante, appelée côté RRU, de recevoir un octet d'en-tête de poids fort, indicateur de structure multitrame, appelé octet d'en-tête de poids fort MSI, envoyé par un dispositif OTN côté unité de bande de base de construction, appelé côté BBU (S101) ;
le fait d'extraire des informations de l'octet d'en-tête de poids fort MSI et de configurer des données de service côté ligne en fonction des informations extraites de l'octet d'en-tête de poids fort MSI (S102) ;
le fait de recevoir un octet d'en-tête de poids faible MSI envoyé par le dispositif OTN côté BBU (S103) ; et
le fait d'extraire des informations de l'octet d'en-tête de poids faible MSI et de configurer des données de service côté client en fonction des informations extraites de l'octet d'en-tête de poids faible MSI (S104).

2. Le procédé de configuration de service selon la revendication 1, dans lequel un type d'unité de données de canal optique, appelé type ODUk, d'un intervalle de temps côté canal optique, appelé côté OCH, est, côté BBU, inséré dans l'octet d'en-tête de poids fort MSI.

3. Le procédé de configuration de service selon la revendication 2, dans lequel l'extraction d'informations de l'octet d'en-tête de poids fort MSI et la configuration de données de service côté ligne selon les informations extraites de l'octet d'en-tête de poids fort MSI comprennent :
le fait d'extraire l'octet d'en-tête de poids fort MSI d'un identifiant de structure de charge utile de poids fort, appelé un PSI de poids fort ;
le fait d'acquérir le type ODUk porté par l'octet d'en-tête de poids fort MSI selon les informations portées par l'octet d'en-tête de poids fort MSI ; et
le fait de configurer un intervalle de temps d'une ODU pour le côté ligne selon le type ODUK.

4. Le procédé de configuration de service selon la revendication 1, dans lequel un type de service, un numéro de port client et des informations croisées correspondant à un port client côté RRU sont insérés dans l'octet d'en-tête de poids faible MSI, les informations croisées comprenant une relation correspondante entre le port client côté RRU et un intervalle de temps côté canal optique, appelé OCH.

5. Le procédé de configuration de service selon la revendication 4, dans lequel l'extraction d'informations de l'octet d'en-tête de poids faible MSI et la configuration de données de service côté client selon les informations extraites de l'octet d'en-tête de poids faible MSI comprennent :
le fait d'extraire l'octet d'en-tête de poids faible MSI d'un PSI de poids faible ;
le fait d'acquérir des informations de configuration de service de port client et des informations croisées selon les informations transportées par l'octet d'en-tête de poids faible MSI ; et
le fait d'établir un service d'un port client désigné selon les informations de configuration de service de port client et les informations croisées.

6. Le procédé de configuration de service selon la revendication 5, dans lequel, après avoir extrait des informations de l'octet d'en-tête de poids faible MSI et configuré des données de service côté client selon les informations extraites de l'octet d'en-tête de poids faible MSI, le procédé comprend en outre :
le fait de mettre à jour une configuration de service et une configuration croisée du dispositif côté RRU selon les informations de configuration de service et les informations croisées reçues.

7. Le procédé de configuration de service selon la revendication 6, ce procédé comprenant en outre les étapes suivantes :
en réponse à l'ajout du service, le fait d'exécuter d'abord la configuration de service, puis d'exécuter une configuration croisée liée à la configuration de service ; et
en réponse à la suppression d'un service, le fait de supprimer d'abord la configuration croisée liée au service, puis de supprimer le service.

8. Un dispositif de réseau de transport optique, appelé dispositif OTN, agencé du côté d'une unité radio distante, appelée côté RRU, comprenant une mémoire (401), un processeur (402) et un programme informatique stocké dans la mémoire (401) et exécutable sur le processeur (402), les étapes du procédé selon l'une quelconque des revendications 1 à 7 étant mises en œuvre lorsque le programme informatique est exécuté par le processeur (402).

9. Un système de configuration de service, comprenant un élément de réseau côté unité de bande de base de construction, appelé côté BBU (801), un dispositif de réseau de transport optique, appelé dispositif OTN côté BBU (802), et le dispositif OTN côté RRU (803) selon la revendication 8, dans lequel
l'élément de réseau côté BBU (801) est configuré pour définir des données de service côté ligne et des données de service côté client, les données de service côté ligne étant définies dans un octet d'en-tête de poids fort MSI et les données de service côté client étant définies dans un octet d'en-tête de poids faible MSI ;
le dispositif OTN côté BBU (802) est configuré pour envoyer l'octet d'en-tête de poids fort MSI au dispositif OTN côté RRU (803) après que l'élément de réseau côté BBU (801) ait défini les données de service côté ligne et les données de service côté client, et envoyer l'octet d'en-tête de poids faible MSI au dispositif OTN côté RRU (803) après l'établissement d'un service côté ligne ; et
le dispositif OTN côté RRU (803) est configuré de façon à configurer les données de service côté ligne en fonction de l'octet d'en-tête de poids fort MSI reçu et configurer les données de service côté client en fonction de l'octet d'en-tête de poids faible MSI reçu.
